# EUROPÄISCHE PATENTSCHRIFT

(11) **EP 4 114 687 B1**
(45) Veröffentlichungstag und Bekanntmachung des Hinweises auf die Patenterteilung: **29.10.2025**
(21) Anmeldenummer: 21714313.0
(22) Anmeldetag: 01.03.2021
(51) Int. Cl.: B60P 3/34, B60P 3/39

(54) **FREIZEITFAHRZEUG**
RECREATIONAL VEHICLE
VEHICULE DE LOISIR

(30) Priorität: 01.03.2020 DE 102020105426
(43) Veröffentlichungstag der Anmeldung: 11.01.2023
(73) Patentinhaber: Bürstner GmbH & CO. KG, 77694 Kehl (DE)
(72) Erfinder: KLUSMANN, Jan, 55606 Heimweiler (DE); NIEDICK, Tim, 77652 Offenburg/ Windschläg (DE)
(74) Vertreter: Müller Schupfner & Partner Patent- und Rechtsanwaltspartnerschaft mbB (Muc)
(86) Internationale Anmeldenummer: PCT/EP2021/055063
(87) Internationale Veröffentlichungsnummer: WO 2021/175789

(56) Entgegenhaltungen:
- EP-A1- 1 832 470
- AU-A1- 2008 258 189
- DE-A1- 102005 006 326
- FR-A1- 2 684 616
- FR-A1- 2 891 219
- GB-A- 2 556 350

## Beschreibung

Die Erfindung betrifft ein Freizeitfahrzeug, insbesondere Wohnmobil, nach dem Oberbegriff des Patentanspruchs 1.

Freizeitfahrzeuge umschließen sowohl Wohnmobile, wie auch in einem weiteren Sinn Multifunktionsfahrzeuge. Bei Letzteren kann eine Einrichtung zum Campen, die beispielsweise Möbelelemente aufweist, die als Liegefläche, als Sitzfläche oder zum Verstauen von Gepäck dienen können, aus dem Fahrzeug entfernt werden, wenn das Fahrzeug nicht zum Campingeinsatz kommt. Dazu sind zumindest einige oder auch alle dieser Möbelelemente demontierbar. Insbesondere sind oft Systeme vorhanden, bei denen kein Werkzeug für die Demontage erforderlich ist, sondern nur Verriegelungselemente beispielsweise an Montageschienen und/oder Haltepunkten geöffnet werden müssen. Für einen anderweitigen Einsatz, beispielsweise für ein Hobby oder beim Sport, steht dann mehr Platz zur Verfügung.

Bei Freizeitfahrzeugen, die als sogenannter Camper-Van aus einem Kleintransporter aufgebaut werden und bei denen auch im hinteren Wohnbereich die originale Karosserie verwendet wird, ergibt sich der Vorteil, dass während der Fahrt aufgrund des gegenüber herkömmlichen Wohnmobilen geringeren Luftwiderstand der Kraftstoffverbrauch in Relation niedriger ist. Auch sind diese Fahrzeuge handlicher, wenn Innenstädte besucht werden sollen.

Auch bei den bekannten teilintegrierten Wohnmobilen, bei denen sich der Wohnkabinenabschnitt über das Fahrerhaus erstreckt, jedoch kein Alkoven vorhanden ist, ergibt sich der Vorteil, dass das Fahrzeug geringere Abmessungen aufweist und insbesondere einen geringeren Luftwiderstand und somit Vorteile hat beim Kraftstoffverbrauch während der Fahrt.

Eine Alkovenmobil hat demgegenüber Vorteile in punkto Schlafkomfort und Raum, da der Platz über der Fahrerkabine optimal genutzt wird.

Aus der AU 2008 258 189 A1 ist ein Hubdach für ein Freizeitfahrzeug bekannt, das an einem Scherenelement gehalten durch eine umlaufende, aufblasbare Seitenwand waagrecht angehoben wird.

Nachteilig an diesem Stand der Technik ist, dass sie keine Möglichkeit für die Erweiterung eines Alkovens bietet. Auch ist die Stabilität des angehobenen Daches gegenüber Bewegungen nicht optimal. Wenn sich beispielsweise eine Person mit dem Arm gegen das angehobene Dach abstützt, entsteht ein instabiler Eindruck.

Aus der DE 4237 299 A1 ist eine Vorrichtung zur Vergrößerung der Höhe eines Alkovens bei einem Wohnmobil bekannt, bei dem ein Alkovengehäuse um eine Schwenkachse in Höhe der vorderen Kante des Alkovens nach oben gedreht wird.

Nachteilig an diesem Stand der Technik ist, dass im vorderen Bereich lediglich eine unwesentliche Verbesserung der Raumverhältnisse erreicht wird und die Seitenwände in Bezug auf Isolierung und Geräuschdämmung bei nach oben gedrehtem Alkoven als Faltenbalg wenig komfortabel sind. Auch entsteht ein entsprechender Kraftaufwand beim Anheben.

Der vorliegenden Erfindung liegt die Aufgabe zugrunde, ein Freizeitfahrzeug zur Verfügung zu stellen, dass die zuvor genannten Nachteile vermeidet und mit dem die Vorteile eines alkovenlosen Freizeitfahrzeugs mit den Vorteilen eines Wohnmobils mit einem Alkoven verbunden werden können. Insbesondere ist es Aufgabe der Erfindung, möglichst denselben Komfort in Bezug auf Isolierung und Geräuschdämmung zur Verfügung zu stellen wie bei einem Alkovenwohnmobil.

Diese Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Freizeitfahrzeug, insbesondere Wohnmobil, mit einem Aufenthaltsbereich über einem Fahrersitzplatz als Alkoven, insbesondere Schlafbereich, wobei ein Dachbereich über dem Alkoven zur Raumerweiterung anhebbar ist und allseitig durch aufblasbare Hohlkammerelemente gebildete Seitenwände aufweist sowie die Hubbewegung bestimmende Leitelemente, die Hubbewegung durch das Leitelement derart geführt wird, dass der Dachbereich vollständig abhebt und in seiner angehobenen Stellung um einen Winkel um eine Fahrzeugquerachse gedreht ist gegenüber seiner abgesenkten Stellung.

Dadurch können die Vorteile eines alkovenlosen Fahrzeuges wie etwa eines Camper-Van oder teilintegrierten Wohnmobils in Bezug auf den Kraftstoffverbrauch beim Fahrbetrieb mit der Bequemlichkeit eines Wohnmobils mit einem Alkoven verbunden werden, das die Möglichkeit eines bequemen und gut abgrenzbaren Schlafbereichs beispielsweise für Kinder bietet. Durch die Seitenwände, die aus mit Luft gefüllten Hohlkammerelementen bestehen, wird eine gute Wärmeisolierung und auch bessere Geräuschdämmung erreicht, als wenn nur eine Zeltplane als Seitenwand eingesetzt wird. Durch die Neigung zumindest in der angehobenen Endstellung des Dachbereichs können die Raumverhältnisse optimiert und gesteuert werden. Beispielsweise ist es möglich, eine größere Höhe über der Schlaffläche im in Fahrtrichtung hinteren Bereich zu erreichen, wenn der Dachbereich in der oberen Stellung nach vorne geneigt ist gegenüber seiner abgesenkten Stellung. In diesem Bereich befindet sich der Zugang zu dem Alkoven über eine Leiter.

Vorteilhaft ist das Leitelement ein Scherenbeschlag.

Durch diese Führung des Leitelements erfolgt eine Stabilisierung.

In einer günstigen Ausgestaltung besteht das Leitelement aus mindestens einem mit dem Dachbereich starr verbundenen Lenker, der außerhalb der Grundfläche des Dachbereichs an einer zum Fahrzeug querorientierten Achse drehbar befestigt ist.

Vorteilhaft weist der Dachbereich zwei Lenker auf, die jeweils an der Außenseite des Dachbereichs zu der Fahrzeugseite angeordnet sind.

Dadurch kann eine sehr stabile Führung des Dachbereichs und auch Stabilisierung in der angehobenen Stellung erreicht werden. Insbesondere ist der Dachbereich nicht nur gegenüber Bewegungen in der Längsrichtung, sondern durch die zwei Lenker auch gegenüber Bewegungen in der Querrichtung stabilisiert in seiner angehobenen Position. Es ergibt sich ein besserer Stabilitätseindruck und somit positiver Eindruck beim Benutzer des Freizeitfahrzeugs.

Die querorientierte Achse kann in einem Fahrzeugdach in Fahrtrichtung hinter dem Dachbereich angeordnet sein.

Es kann dadurch eine relativ große Länge der Lenker erreicht werden. Dies ergibt insgesamt eine große zusätzliche Höhe, wenn der Dachbereich über die Lenker nach oben gedreht wird.

Vorteilhaft kann der Dachbereich in seiner angehobenen Stellung durch die beim Befüllen der Hohlkammerelemente mit Luft unter Überdruck entstehende Kraft angehoben werden.

In einer vorteilhaften Ausgestaltung sind die Hohlkammerelemente Drop-Stich Elemente.

Ein aufgeblasenes Drop-Stich Element weist nicht nur die Vorteile in Bezug auf Wärmeisolierung sowie Geräuschdämmung einer luftgefüllten Seitenwand auf, sondern ergibt auch eine große Steifigkeit. Dadurch ergibt sich insgesamt eine große Stabilität, aber auch für den Benutzer ein Eindruck und eine Haptik, die ähnlich einer festen Wand ist.

In einer Weiterbildung ist der Dachbereich in abgesenkten Zustand in Fahrtrichtung nach vorne abfallend ausgebildet.

Insbesondere mit Lenkern als Leitelementen, die auf Höhe des Fahrzeugdachs hinter dem Dachbereich in Fahrtrichtung angeordnet sind, ergibt sich dadurch der Vorteil, dass der im angehobenen Zustand nach oben gedrehte Dachbereich im Wesentlichen waagrecht liegen und eine in dem gebildeten Alkoven relativ gleichmäßige Raumhöhe erreicht werden kann.

Der Dachbereich kann im Längsquerschnitt eine nach oben gewölbte Biegung aufweisen.

Dies verbessert im abgesenkten Zustand den Luftwiderstand, indem der Dachbereich mit der Wölbung ansteigt, an die sich die waagrechte Dachfläche des Fahrzeugs anschließt.

Weitere Vorteile und Einzelheiten der Erfindung werden anhand der in den schematischen Figuren dargestellten Ausführungsbeispiele näher erläutert. Hierbei zeigt
- Fig. 1: in einer Perspektivansicht ein erstes Ausführungsbeispiel eines erfindungsgemäßen Wohnmobils mit angehobenen Dachbereich,
- Fig. 2: das Wohnmobil der Fig. 1 in einem Detailausschnitt in Seitenansicht,
- Fig. 3: im Detail den Alkoven der Fig. 1 in Seitenansicht mit einem Scherenbeschlag,
- Fig. 4: ein weiteres Ausführungsbeispiel eines erfindungsgemäßen Wohnmobils mit angehobenem Dachbereich in Perspektivansicht,
- Fig. 5: das Wohnmobil der Fig. 4 mit abgesenktem Dachbereich in Perspektivansicht und
- Fig. 6: das Wohnmobil der Fig. 4 in einem Detailausschnitt in Seitenansicht.

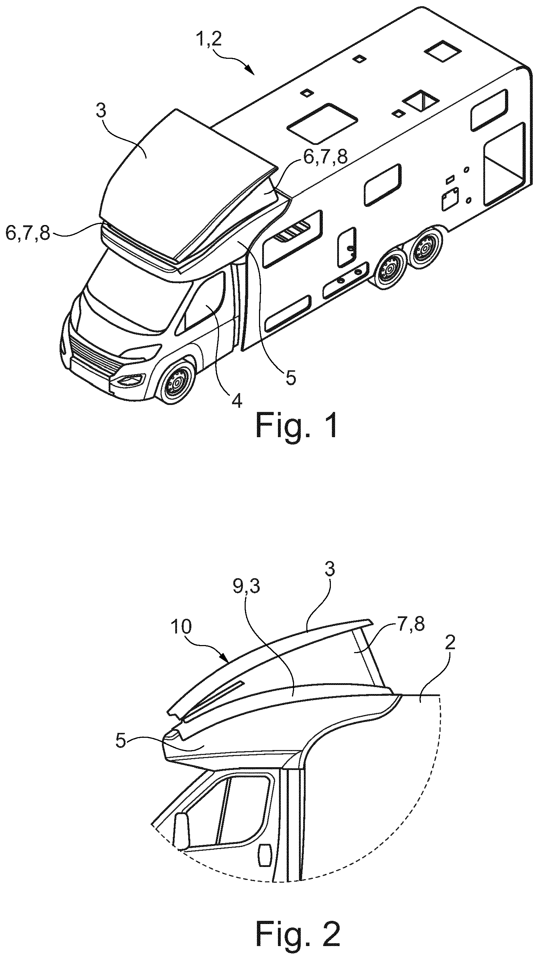

Die Fig. 1 zeigt in einer Perspektivansicht ein erstes Ausführungsbeispiel eines erfindungsgemäßen Freizeitfahrzeugs 1, das als Wohnmobil 2 ausgeführt ist, mit angehobenen Dachbereich 3. Über einem Fahrersitzplatz 4 ist ein Alkoven 5 angeordnet, in dem ein Schlafplatz zur Verfügung steht. In dem hier dargestellten angehobenen Zustand des Dachbereichs 3 steht in dem Alkoven 5 eine ausreichende Raumhöhe zur Verfügung, so dass Personen sich dort aufhalten und schlafen können.

Alle vier Seitenwände 6 bestehen bei angehobenen Dachbereich 3 aus mit Luft unter Überdruck gefüllten Hohlkammerelementen 7.Dies können insbesondere vorteilhaft Drop-Stich-Elemente 8 sein, bei denen aufgrund einer Vielzahl von Verbindungsfasern zwischen den Seitenwänden im mit Druckluft gefüllten Zustand eine sehr hohe Steifigkeit sich ergibt. Der Dachbereich 3 wird dabei durch das Befüllen der Hohlkammerelemente 7 mit Druckluft und der sich daraus ergebenden Hubkraft angehoben. Umgekehrt wird der Dachbereich 3 abgesenkt, wenn die Druckluft abgelassen wird.

Die Fig. 2 zeigt das Wohnmobil 2 der Fig. 1 in einem Detailausschnitt in Seitenansicht. Die als Drop-Stich-Elemente 8 ausgeführten Hohlkammerelemente 7 haben durch die Kraft des Luftüberdrucks den Dachbereich 3 angehoben, um den Raum in dem Alkoven 5 zu vergrößern. Ebenfalls eingezeichnet ist eine abgesenkte Stellung 9 des Dachbereich 3. Dadurch ist im Vergleich gut zu erkennen, dass der Dachbereich 3 in der angehobenen Stellung um eine Querachse um einen Winkel gedreht ist. Der Dachbereich 3 fällt nach vorne ab und weist zusätzlich eine nach oben gerichtete Wölbung 10 auf.

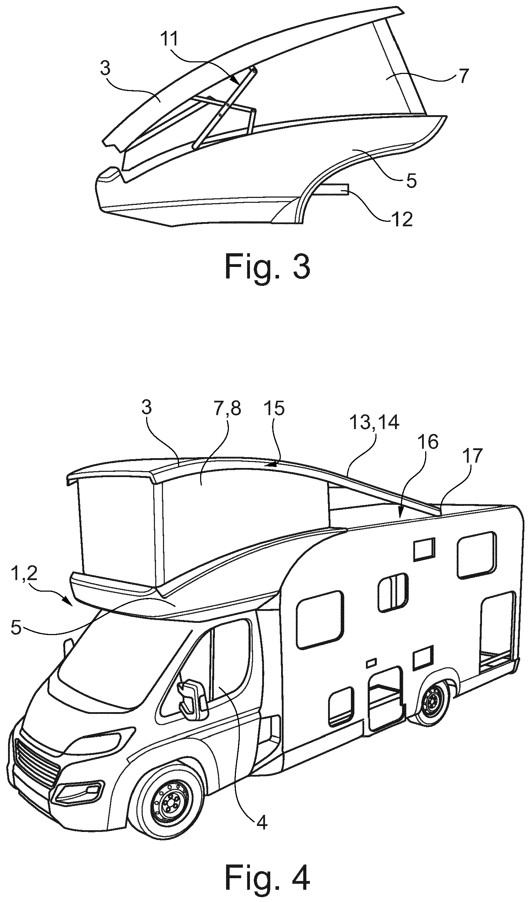

Die Fig. 3 zeigt im Detail den Alkoven 5 der Fig. 1 in Seitenansicht mit einem Scherenbeschlag 11 als Leitelement 13, das den Dachbereich 3 beim Anheben durch die Hohlkammerelemente 7 führt und in seiner angehobenen Stellung stabilisiert. In dieser Darstellung ist noch eine Liegefläche 12 des als Schlafraum genutzten Alkovens 5 zum Teil sichtbar eingezeichnet.

Die Fig. 4 zeigt ein weiteres Ausführungsbeispiel eines erfindungsgemäßen Freizeitfahrzeug 1 in Form eines Wohnmobils 2 mit angehobenem Dachbereich 3 in Perspektivansicht. Der bisherigen Ausführungsform entsprechende Bauelemente sind mit denselben Bezugszeichen versehen. Über einem Fahrersitzplatz 4 ist auch hier ein Alkoven 5 angeordnet über dem ein Dachbereich 3 durch Hohlkammerelemente 7 in Form von Drop Stich-Elementen 8 mithilfe von Luftüberdruck angehoben ist.

Als Leitelemente 13 dienen hier Lenker 14, die jeweils an den Außenseiten 15 zur Fahrzeugseite des Dachbereichs 3 angeordnet sind und in einem Dachbereich 16 hinter dem Alkoven 5 in Fahrtrichtung an einer Querachse 17 drehbar gelagert sind.

Wenn der Dachbereich 3 durch das Befüllen der Hohlkammerelemente 7 mit Druckluft angehoben wird, führen die Lenker 14 die Bewegung und stabilisieren den Dachbereich 3 in angehobenen Zustand sowohl in Längsrichtung wie auch Querrichtung gegenüber Bewegungen. Zusammen mit der Steifigkeit der Drop-Stich-Elemente 8 ergibt sich ein sehr steifer und fester Aufbau.

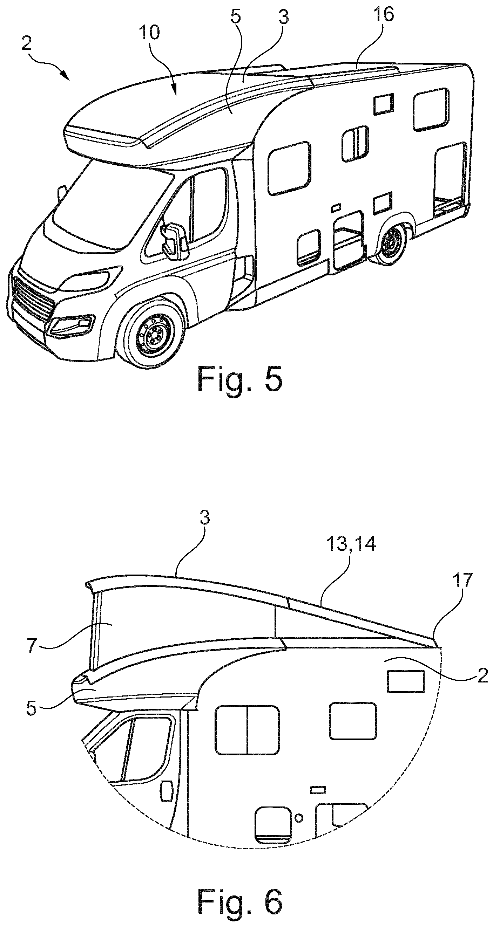

Die Fig. 5 zeigt das Wohnmobil 2 der Fig. 4 mit abgesenktem Dachbereich 3 in Perspektivansicht. Der Dachbereich 3 fällt nach vorne in Fahrtrichtung ab und weist eine Wölbung 10 auf, sodass das Dach von vorne beginnend aerodynamisch günstig ansteigt und dann in den flachen Dachbereich 16 hinter dem Alkoven 5 übergeht. In Bezug auf den Treibstoffverbrauch wie auch die Handlichkeit des Wohnmobils 2 bei der Fahrt ergibt sich dieselbe Situation wie bei einem teilintegrierten Fahrzeug, obwohl beim Campingbetrieb die Bequemlichkeit eines Alkovenmodells zur Verfügung steht.

Die Fig. 6 zeigt das Wohnmobil 2 der Fig. 4 in einem Detailausschnitt in Seitenansicht. Der Dachbereich 3 ist angehoben dargestellt und wird von den Lenkern 14 als Leitelemente 13 in seiner Position stabilisiert und geführt. Wenn die Hohlkammerelemente 7, wie in der Darstellung gezeigt, mit Druckluft gefüllt sind, ist der Dachbereich 3 durch Verdrehen der Lenker 14 an einer Querachse 17 nach oben angehoben. Wie in der Darstellung gut zu erkennen ist, ergibt sich über die Länge des Alkovens 5 eine im Wesentlichen gleichmäßige und deutlich erhöhte Raumhöhe.

## Patentansprüche

1. Freizeitfahrzeug, insbesondere Wohnmobil (2), mit einem Aufenthaltsbereich über einem Fahrersitzplatz als Alkoven (5), insbesondere Schlafbereich, wobei ein Dachbereich (3) über dem Alkoven (5) zur Raumerweiterung anhebbar ist und die Hubbewegung bestimmende Leitelemente (13) aufweist,
wobei die Hubbewegung durch das Leitelement (13) derart geführt wird, dass der Dachbereich vollständig abhebt und in seiner angehobenen Stellung um einen Winkel um eine Fahrzeugquerachse (17) gedreht ist gegenüber seiner abgesenkten Stellung,
**dadurch gekennzeichnet,**
**dass** der Dachbereich (3) allseitig durch aufblasbare Hohlkammerelemente (7) gebildete Seitenwände aufweist, wobei
das Leitelement (13) ein Scherenbeschlag (11) ist und/oder
das Leitelement (13) aus mindestens einem mit dem Dachbereich (3) starr verbundenen Lenker (14) besteht, der außerhalb der Grundfläche des Dachbereichs (3) an einer zum Fahrzeug querorientierten Achse (17) drehbar befestigt ist.

2. Freizeitfahrzeug nach Anspruch 1,
**dadurch gekennzeichnet,**
**dass** der Dachbereich (3) zwei Lenker (14) aufweist, die jeweils an den Außenseiten (15) des Dachbereichs (3) zu der Fahrzeugseite angeordnet sind.

3. Freizeitfahrzeug nach Anspruch 1 oder 2,
**dadurch gekennzeichnet,**
**dass** die querorientierte Achse (17) in einem Fahrzeugdach (16) in Fahrtrichtung hinter dem Dachbereich (3) angeordnet ist.

4. Freizeitfahrzeug nach einem der vorhergehenden Ansprüche,
**dadurch gekennzeichnet,**
**dass** der Dachbereich (3) in seiner angehobenen Stellung durch die beim Befüllen der Hohlkammerelemente (7) mit Luft unter Überdruck entstehende Kraft angehoben werden kann.

5. Freizeitfahrzeug nach einem der vorhergehenden Ansprüche,
**dadurch gekennzeichnet,**
**dass** die Hohlkammerelemente (7) Drop-Stich Elemente (8) sind.

6. Freizeitfahrzeug nach einem der vorhergehenden Ansprüche,
**dadurch gekennzeichnet,**
**dass** der Dachbereich (3) in abgesenkten Zustand in Fahrtrichtung nach vorne abfallend ausgebildet ist.

7. Freizeitfahrzeug nach Anspruch 6,
**dadurch gekennzeichnet,**
**dass** der Dachbereich (3) im Längsquerschnitt eine nach oben gewölbte Biegung (10) aufweist.

## Claims

1. Recreational vehicle, in particular a motorhome (2), with a lounge area above a driver's seat in the form of an alcove (5), in particular a sleeping area, wherein a roof area (3) above the alcove (5) can be raised to expand the space and has guide elements (13) that determine the lifting movement,
wherein the lifting movement is guided by the guide element (13) in such a way that the roof area lifts completely and, in its raised position, is rotated by an angle around a vehicle transverse axis (17) compared to its lowered position,
**characterised in that**
the roof area (3) has side panels formed on all sides by inflatable hollow chamber elements (7), wherein the guide element (13) is a scissor hinge (11) and/or the guide element (13) consists of at least one handlebar (14) rigidly connected to the roof area (3), which is rotatably attached outside the base area of the roof area (3) on an axis (17) oriented transversely to the vehicle.

2. Recreational vehicle according to claim 1,
**characterised in that**
the roof area (3) has two handlebars (14), each of which is arranged on the outer sides (15) of the roof area (3) towards the vehicle side.

3. Recreational vehicle according to claim 1 or 2,
**characterised in that**
the transversely oriented axis (17) is arranged in a vehicle roof (16) in the direction of travel behind the roof area (3).

4. Recreational vehicle according to one of the preceding claims,
**characterised in that**
the roof area (3) can be raised in its raised position by the force generated when the hollow chamber elements (7) are filled with air under overpressure.

5. Recreational vehicle according to one of the preceding claims,
**characterised in that**
the hollow chamber elements (7) are drop-stitch elements (8).

6. Recreational vehicle according to one of the preceding claims,
**characterised in that**
the roof area (3) is designed to slope forwards in the direction of travel when lowered.

7. Recreational vehicle according to claim 6,
**characterised in that**
the roof area (3) has an upwardly curved bend (10) in longitudinal cross-section.

## Revendications

1. Véhicule de loisirs, en particulier camping-car (2), comprenant un espace de séjour au-dessus d'une place de siège de conducteur sous forme d'alcôve (5), en particulier un espace de couchage, dans lequel une zone de toit (3) peut être relevée au-dessus de l'alcôve (5) pour élargir l'espace, et le mouvement de levage présente des éléments de guidage (13) déterminants, dans lequel le mouvement de levage est guidé par l'élément de guidage (13) de telle sorte que la zone de toit se relève entièrement et, dans sa position relevée, est pivotée à raison d'un angle autour d'un axe (17) transversal par rapport au véhicule, par rapport à sa position abaissée,
**caractérisé en ce que**
la zone de toit (3) présente de tous les côtés des parois latérales formées par des éléments gonflables à chambre creuse (7), dans lequel
l'élément de guidage (13) est une armature en ciseaux (11) et/ou
l'élément de guidage (13) se compose d'au moins un bras articulé, relié de manière solidaire à la zone de toit (3), qui est fixé en rotation à l'extérieur de la surface de base de la zone de toit (3) au niveau d'un axe (17) orienté transversalement par rapport au véhicule.

2. Véhicule de loisirs selon la revendication 1,
**caractérisé en ce que**
la zone de toit (3) présente deux bras articulés (12) qui sont chacun agencés au niveau des côtés extérieurs (15) de la zone de toit (3) côté véhicule.

3. Véhicule de loisirs selon la revendication 1 ou 2,
**caractérisé en ce que** l'axe (17) orienté transversalement est agencé dans un toit de véhicule (16) derrière la zone de toit (3) dans une direction d'avance.

4. Véhicule de loisirs selon l'une quelconque des revendications précédentes,
**caractérisé en ce que**
la zone de toit (3), dans sa position relevée, peut être relevée au moyen d'une force générée lors du remplissage des éléments à chambre creuse (7) avec de l'air en surpression.

5. Véhicule de loisirs selon l'une quelconque des revendications précédentes,
**caractérisé en ce que**
les éléments à chambre creuse (7) sont des éléments en dropstich.

6. Véhicule de loisirs selon l'une quelconque des revendications précédentes,
**caractérisé en ce que**
la zone de toit (3), dans l'état abaissé, est réalisée en pente vers avant dans une direction d'avance.

7. Véhicule de loisirs selon la revendication 6,
**caractérisé en ce que**
la zone de toit (3) présente, dans une section longitudinale, une courbure (10) bombée vers le haut.
